# EUROPEAN PATENT SPECIFICATION

(11) **EP 3 973 028 B1**
(45) Date of publication and mention of the grant of the patent: **04.03.2026**
(21) Application number: 20730710.9
(22) Date of filing: 20.05.2020
(51) Int. Cl.: C09J 123/08, C08L 23/08, C08L 23/04, C08L 23/10

(54) **HOT MELT ADHESIVE COMPOSITIONS COMPRISING BIOBASED EVA, METHODS AND ARTICLES THEREOF**
SCHMELZHAFTZUSAMMENSETZUNGEN MIT EVA AUF BIOBASIS, VERFAHREN UND GEGENSTÄNDE DARAUS
COMPOSITIONS ADHÉSIVES THERMOFUSIBLES COMPRENANT DE L'EVA BIOSOURCÉ, PROCÉDÉS ET ARTICLES ASSOCIÉS

(30) Priority: 20.05.2019 US 201962850394 P
(43) Date of publication of application: 30.03.2022
(73) Proprietor: Braskem S.A., 42810-000 Camaçari BA (BR)
(72) Inventor: DELEVATI, Giancarlos, 05501-050 São Paulo, SP (BR)
(74) Representative: Osha BWB
(86) International application number: PCT/IB2020/020026
(87) International publication number: WO 2020/234656

(56) References cited:
- WO-A1-2018/112593
- US-A1- 2017 183 430

## Description

### BACKGROUND

Polyolefins and polyolefin copolymers such as ethylene vinyl acetate (EVA) are widely used plastics worldwide, given their versatility in a wide range of applications, including the manufacture of articles, films, adhesive compositions, molded products, foams, and the like. The increasing complexity of manufactured goods has lead to major improvements and developments, particularly in the hot melt adhesive industry. Hot melt adhesives are being used to bond a wider variety of substrates, within a broader adhesive application process window, and for a large end-use portfolio. During application, hot melt adhesives are applied in a molten state and cooled to harden the adhesive layer. In addition, the adhesive needs to fulfill multiple requirements once set, which may include suitable bond strength, bond retention under or after mechanical stress, and under or after various thermal conditions.

Document US 2017/0183430 A1 describes an example of process for the manufacture of ethylene/carboxylic acid vinyl ester copolymers from renewable materials.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In one aspect, embodiments disclosed herein relate to a hot melt adhesive composition as defined in claim 1, that includes a biobased ethylene vinyl acetate (EVA) copolymer comprising a biobased carbon content as determined by ASTM D6866-18 Method B of 5% to 95%; and a tackifier; wherein the composition has a Brookfield viscosity as determined by ASTM D3236 measured at 180 °C in the range of 30,000 to 90,000 mPa.s ; and wherein the biobased EVA has a melt index (I₂) as determined by ASTM D1238 in the range of 1.5 g/10min to 50 g/10min measured with a load of 2.16 kg at 190°C.

One or more embodiments are directed to a hot melt adhesive composition as defined in the dependent claims.

In another aspect, embodiments disclosed herein relate to a use of the hotmelt adhesive composition according to any of the embodiments of the present disclosure for bonding a substrate to a similar or dissimilar substrate, wherein the substrate is selected from a group consisting of fabric, non-woven materials, polyurethane, ethylene vinyl acetate copolymer, polypropylene, polyethylene, polyvinylchloride, polyester, polyamide, wood, metal, paper and kraft.

In yet another aspect, embodiments disclosed herein relate to a process for bonding a substrate to a similar or dissimilar substrate that includes applying to at least one substrate a hot melt adhesive composition comprising the hot melt adhesive composition according to any of the embodiments of the present disclosure, and bonding said substrate together.

In yet another aspect, embodiments disclosed herein relate to a multi-layer article that includes at least one layer of the hot melt adhesive composition according to any of the embodiments of the present disclosure; and one or more substrate layers.

Other aspects and advantages of the claimed subject matter will be apparent from the following description and the appended claims.

### DETAILED DESCRIPTION

In one aspect, embodiments disclosed herein relate to hot melt adhesive compositions containing ethylene vinyl acetate (EVA) copolymers. Hot melt adhesive compositions may contain a portion of biobased EVA copolymer that is derived from renewable source of carbon, such as a plant-based material. In some embodiments, adhesive compositions may be formulated to prepare adhesives for a number of common substrates such as rubbers, ceramics, metals, plastics, glass, fabrics (woven and non-woven), and wood.

Embodiments of the present disclosure are also directed to processes for creating multilayer structures by using a hot melt adhesive composition based on renewable carbon sources to bond one or more substrate layers together. In one or more embodiments, processes may include bonding a substrate to a similar or dissimilar substrate by applying a molten hot melt adhesive composition to a substrate and bonding the treated substrate to a second substrate.

Hot melt adhesive compositions in accordance with the present disclosure may be formulated with at least part of a fraction of biobased ethylene vinyl acetate (EVA) as a replacement for (or in addition to) EVA copolymers derived from petrochemical sources. As used herein, "biobased EVA" is an EVA wherein at least one of ethylene and/or vinyl acetate monomers constituting the copolymer are derived from renewable sources, such as ethylene derived from biobased ethanol.

The use of products derived from natural sources, as opposed to those obtained from fossil sources, as raw material, has increasingly been a widely preferred alternative, as an effective means of reducing the atmospheric carbon dioxide concentration increase, therefore effectively preventing the expansion of the so called greenhouse effect. Adhesive compositions in accordance with the present disclosure may reduce the overall impact on carbon dioxide levels by incorporating a portion of materials obtained from renewable carbon sources. This renewable carbon content can be certified by the methodology described in the technical ASTM D6866-18 Standard, "Standard Test Methods for Determining the Biobased Content of Solid, Liquid, and Gaseous Samples Using Radiocarbon Analysis."

In one or more embodiments, adhesive compositions may be formulated with various performance modifiers that include tackifier resins and optional waxes to tailor the adhesive compositions for particular applications. Each of the components will be discussed in detail in the following sections.

### Biobased EVA Copolymer

Hot melt adhesive compositions in accordance with the present disclosure may include one or more ethylene vinyl acetate (EVA) copolymers incorporating various ratios of ethylene and vinyl acetate, and may include one or more additional comonomers in some embodiments, wherein at least a portion of the EVA copolymers may be derived from renewable sources such as biobased EVA, which may be used alone or in combination with EVA copolymers derived from fossil sources.

Adhesive compositions in accordance with the present disclosure may include biobased EVA copolymers incorporating various ratios of ethylene and vinyl acetate. In one or more embodiments, adhesive compositions in accordance with the present disclosure may include a biobased EVA copolymer, wherein the percent by weight (wt%) of ethylene in the biobased EVA ranges from a lower limit selected from any one of 30 wt%. 40 wt%, 45 wt%, 50 wt%, 55 wt%, 60 wt%, 66 wt%, and 72 wt%, to an upper limit selected from any one of 80 wt%, 82 wt%, 88 wt%, and 92 wt%, where any lower limit may be paired with any upper limit. Similarly, adhesive compositions in accordance with the present disclosure may include a biobased EVA copolymer having a wt% of vinyl acetate content as determined by ASTM D5594 that ranges from a lower limit selected from any one of 8 wt%, 12 wt%, 15 wt%, 17 wt%, 18 wt%, 20 wt%, 26 wt%, and 28 wt% to an upper limit selected from any one of 28 wt%, 30 wt%, 33 wt%, 35 wt%, 40 wt%, and 45 wt%, where any lower limit may be paired with any upper limit. In some embodiments, biobased EVA may be selected from commercially available resins by Braskem such as SVT2180 or SVT2145R.

Biobased EVA copolymers may have a biobased carbon content as determined by ASTM D6866-18 Method B that ranges from a lower limit selected from any one of 5%, 10%, 20%, 40 %, and 55%, to an upper limit selected from any one of 60 wt%, 80 wt%, 95 wt%, and 99 wt%, where any lower limit may be paired with any upper limit. The total biobased or renewable carbon in the EVA polymer may be contributed from a biobased ethylene and/or a biobased vinyl acetate. It is understood that if at least a portion of the ethylene and/or the vinyl acetate is derived from a renewable source, it can be considered a biobased EVA, even if a fossil based ethylene and/or vinyl acetate is present in the polymerization process. Each of these are described in greater detail below. Further, while particular embodiments of the present disclosure may be directed to use of biobased EVA copolymers in the production of hot melt adhesive compositions, it is also understood that one or more other components may also be formed from renewable sources or one or more other components may be formed from fossil sources. The total biobased carbon content of the final composition and article, discussed below, may thus be based on consideration of all components.

Sources of renewable carbon for ethylene and vinyl acetate used to produce biobased EVA copolymers may include plant-based sources such as sugar cane and sugar beet, maple, date palm, sugar palm, sorghum, American agave, corn, wheat, barley, sorghum, rice, potato, cassava, sweet potato, algae, fruit, materials comprising cellulose, wine, materials comprising hemicelluloses, materials comprising lignin, wood, straw, sugarcane bagasse, sugarcane leaves, corn stover, wood residues, paper, and combinations thereof.

In one or more embodiments, a biobased ethylene may be obtained by fermenting a renewable source of carbon to produce ethanol, which may be subsequently dehydrated to produce ethylene. Further, it is also understood that the fermenting produces, in addition to the ethanol, byproducts of higher alcohols. If the higher alcohol byproducts are present during the dehydration, then higher alkene impurities may be formed alongside the ethanol. In one or more embodiments, the ethanol may be purified prior to dehydration to remove the higher alcohol byproducts while in other embodiments, the ethylene may be purified to remove the higher alkene impurities after dehydration.

Biologically sourced ethanol, known as bio-ethanol, is obtained by the fermentation of sugars derived from cultures such as that of sugar cane and beets, or from hydrolyzed starch, which is, in turn, associated with other cultures such as corn. It is also envisioned that the biobased ethylene may be obtained from hydrolysis based products from cellulose and hemi- cellulose, which can be found in many agricultural by-products, such as straw and sugar cane husks. This fermentation is carried out in the presence of varied microorganisms, the most important of such being the yeast *Saccharomyces cerevisiae.* The ethanol resulting therefrom may be converted into ethylene by means of a catalytic reaction at temperatures usually above 300°C. A large variety of catalysts can be used for this purpose, such as high specific surface area gamma-alumina. Other examples include the teachings described in U.S. Patent Nos. 9,181,143 and 4,396,789.

Biobased EVA copolymers of the present disclosure may also be derived from biobased vinyl acetate monomers in some embodiments. Biobased vinyl acetate may be produced by producing acetic acid by oxidation of ethanol (which may be formed as described above) followed by reaction of ethylene and acetic acid to acyloxylate the ethylene and arrive at vinyl acetate. Further, it is understood that the ethylene reacted with the acetic acid may also be formed from a renewable source as described above. Additional details about oxidation of ethanol to form acetic acid may be found in U.S. Patent No. 5,840,971 and Selective catalytic oxidation of ethanol to acetic acid on dispersed Mo-V-Nb mixed oxides. Li X, Iglesia E. Chemistry; 2007;13(33):9324-30.

Vinyl acetate in accordance with the present disclosure may also be generated by the esterification of acetic acid obtained from a number of natural sources, including conversion of fatty acid, as described in The Production of Vinyl Acetate Monomer as a Co-Product from the Non-Catalytic Cracking of Soybean Oil, Benjamin Jones, Michael Linnen, Brian Tande and Wayne Seames, Processes, 2015, 3, 61-9-633. Further, the production of acetic acid from fermentation performed by acetogenic bacteria, as described in Acetic acid bacteria: A group of bacteria with versatile biotechnological applications, Saichana N, Matsushita K, Adachi O, Frébort I, Frebortova J.; Biotechnol Adv. 2015 Nov 1;33(6 Pt 2):1260-71 and Biotechnological applications of acetic acid bacteria. Raspor P, Goranovic D. Crit Rev Biotechnol.; 2008; 28(2):101-24.

The hot melt adhesive composition according to any of the embodiments of the present disclosure comprises a biobased EVA copolymer the biobased EVA having a melt index (I₂) as determined by ASTM D1238 in the range of 1.5 g/10min to 50 g/10min measured with a load of 2.16 kg at 190°C. Biobased EVA copolymers in accordance with the present disclosure may have a melt index (I₂) as determined by ASTM D1238 with a load of 2.16 kg at 190°C that may range of a lower limit selected from any one of 1.5 g/10 min, 2.0 g/10 min, 3.0 g/10 min, 10 g/10min, 25 g/10 min, to an upper limit selected from any one of 5 g/10min, 10 g/10 min, 20 g/10min, 25 g/10min, 40 g/10min, 50 g/10min, where any lower limit can be used with any upper limit. In particular embodiments, a biobased EVA copolymer may have a vinyl acetate content as determined by ASTM D5594 of 16 wt% to 45 wt%; and a melt index (I₂) as determined by ASTM D1238 in the range of 1.5 g/10min to 5 g/10min measured with a load of 2.16 kg at 190°C.

Biobased EVA copolymers, in accordance with the present disclosure may have a density as determined by ASTM D792 that may range of a lower limit selected from any one of 0.9 g/cm³, 0.91 g/cm³, 0.92 g/cm³, and 0.93 g/cm³ to an upper limit selected from any one of 0.94 g/cm³, 0.95 g/cm³, 0.96 g/cm³, or 0.97 g/cm³, where any lower limit can be used with any upper limit.

In one or more embodiments, an adhesive composition may contain a biobased EVA copolymer at a percent by weight (wt%) of the composition that ranges from a lower limit of 2 wt%, 5 wt%, 10 wt%, 20 wt%, 30 wt%, 40 wt%, or 50 wt%, to an upper limit of 50 wt%, 60 wt%, 70 wt%, 80 wt%, or 90 wt%, where any lower limit may be paired with any upper limit. In particular embodiments, biobased EVA may be present in the composition at a percent by weight (wt%) of the composition that ranges from 10 wt% to 80 wt%. In other embodiments, biobased EVA may be present in the composition at a percent by weight (wt%) of the composition that ranges from 20 wt% to 40 wt%. However, it is also envisioned, as discussed below, that other amounts of biobased EVA may be used, depending on the properties of the biobased EVA such as when a blend of biobased EVA and fossil EVA are used together. Thus, in one or more embodiments, an adhesive composition may contain an EVA copolymer (which is a blend of a biobased EVA and a fossil EVA) at percent by weight (wt%) of the composition that ranges from a lower limit of 20 wt%, 30 wt%, 40 wt%, or 50 wt%, to an upper limit of 50 wt%, 60 wt%, 70 wt%, 80 wt%, or 90 wt%, where any lower limit may be paired with any upper limit.

### Secondary Polymer

In one or more embodiments, hot melt adhesive compositions in accordance to the present disclosure may further comprise a secondary polymer selected from the group consisting of fossil EVA, ethylene-acrylic ester copolymers such as Ethylene-Butyl Acrylate copolymer (EBA), Ethylene-Methyl Acrylate copolymer (EMA), polyethylene, polypropylene and combinations thereof.

Secondary polymers in accordance with the present disclosure may have a melt index (I₂) as determined by ASTM D1238 as measured with a load of 2.16 kg at 190°C that ranges from a lower limit selected from any one of 2 g/10min, 2.5 g/10min, 25 g/10 min, 100 g/10 min, 150 g/10 min, and 200 g/10min, to an upper limit selected from 250 g/10 min, 300 g/10 min, 400 g/10 min, 500 g/10min, and 900 g/10min, where any lower limit may be paired with any upper limit.

In one or more embodiments, hot melt adhesive composition may contain a mixture of biobased EVA and "fossil EVA" copolymers derived from traditional fossil fuel sources or otherwise differentiated from the biobased EVA described above. In some embodiments, an adhesive composition may contain a fossil EVA copolymer a percent by weight (wt%) of the composition that ranges from a lower limit of 5 wt%, 8 wt%, 10 wt%, 15 wt%, 20 wt%, 25 wt%, or 30 wt%, to an upper limit of 25 wt%, 30 wt%, 35 wt%, 40 wt%, 50 wt%, or 60 wt%, where any lower limit may be paired with any upper limit. In particular embodiments, hot melt adhesive compositions in accordance with the present disclosure may include 8 to 50 wt% of fossil EVA. Thus, when using a blend of biobased EVA and fossil EVA, it is envisioned that the amount of fossil EVA being blended with the biobased EVA may be selected, for example, on the properties of the biobased EVA and the desired properties of the adhesive melt composition. When using such a blend, it is envisioned as having a weight ratio (of biobased EVA:fossil EVA) having a lower limit of any of 7:93, 10:90, 15:85, 20:80, 40:60, or 50:50 to an upper limit of any of 20:80, 30:70, 50:50, 80:20, or 90:10 where any lower limit can be used with any upper limit.

In particular embodiments, fossil EVA copolymers in accordance with the present disclosure may include a percent by weight (wt%) of vinyl acetate as determined by ASTM D5594 that ranges from a lower limit selected from any one of 12 wt%, 16 wt%, 17 wt%, 20 wt%, 26 wt%, 28 wt%, and 35 wt%, to an upper limit selected from any one of 30 wt%, 35 wt%, 40 wt%, and 45 wt%, where any lower limit may be paired with any upper limit.

In particular embodiments, adhesive compositions may include a fossil EVA that exhibits a vinyl acetate content as determined by ASTM D5594 of 16 to 45 wt%, and a melt index (I₂) as determined by ASTM D1238 in the range of 2.5 to 900 g/10min measured with a load of 2.16 kg at 190°C. In other embodiments, fossil EVA copolymers in accordance with the present disclosure may have a melt index (I₂) as determined by ASTM D1238 as measured with a load of 2.16 kg at 190°C that ranges from a lower limit of any of 2.5 g/10 min, 5 g/10 min, 10 g/10min, 25 g/10 min, 50 g/10 min, 100 g/10 min, and 150 g/10 min to an upper limit of any of 20 g/10min, 25 g/10min, 40 g/10min, 50 g/10min, 100 g/10 min, 200 g/10 min, 400g/10 min, 500 g/10min, 800 g/10 min, and 900 g/10 min. In some embodiments, fossil EVA resins may be selected from commercially available resins by Braskem such as HM728, 3019PE, 8019PE, PN2021, HM150, HM728F, and HM2528.

Fossil EVA copolymers, in accordance with the present disclosure may have a density as determined by ASTM D1505/D792 that may range of a lower limit selected from any one of 0.91 g/cm³, 0.915 g/cm³ and 0.92 g/cm³ to an upper limit selected from any one of 0.95 g/cm³, 0.96 g/cm³, or 0.97 g/cm³, where any lower limit can be used with any upper limit.

### Tackifier

Tackifiers in accordance with the present disclosure may be a chemical compound or low molecular weight polymer that enhances the adhesion of a hot melt adhesive composition. Tackifiers include any compatible resins or mixtures thereof such as natural and modified rosins including gum rosin, wood rosin, tall oil rosin, distilled rosin, hydrogenated rosin, dimerized rosin, rosin esters, and polymerized rosin; glycerol and pentaerythritol esters of natural and modified rosins, including phenolic-modified rosins and rosin esters; monomeric resins; polymers and copolymers of natural terpenes such as pinene; terpene resins; hydrogenated polyterpene resins; phenolic modified terpene resins and hydrogenated derivatives thereof; indene-coumarone resins; aliphatic petroleum hydrocarbon resins; hydrogenated aliphatic petroleum hydrocarbon resins; C5/C9 hydrocarbon resins, including cyclic or acylic C5 resins and aromatic modified acyclic or cyclic resins, cyclic petroleum hydrocarbon resins and the hydrogenated derivatives, and the like. In some embodiments, tackifiers may be selected from hydrocarbon resins. In other embodiments tackifiers may be selected from commercially available hydrocarbon resins by Braskem such as resins from the UNILENE^{®} family, including Unilene A80, Unilene A90, Unilene A100 or Unilene A120.

In some embodiments, an adhesive composition may contain a tackifier at a percent by weight (wt%) of the composition that ranges from a lower limit of 10 wt%, 15 wt%, 20 wt%, 25 wt%, 30 wt%, to an upper limit of 30 wt%, 35 wt%, 40 wt%, or 50 wt%, 60 wt%, 70 wt%, or 80 wt%, where any lower limit may be paired with any upper limit.

In one or more embodiments, tackifiers may be formulated as a concentrate, or "tackifier masterbatch" that is combined with other polymers and/or additives to prepare a hot melt composition. Tackifier masterbatches may be prepared in any conventional mixing process of resins, such as solubilization and extrusion processes. In one or more embodiments, tackifier masterbatches may be formulated with tackifier and any suitable base polymer having good compatibility with the other components of the hot melt adhesive composition. In particular embodiments the base polymer is an EVA copolymer.

Tackifier masterbatches in accordance with the present disclosure may contain tackifiers at a percent by weight (wt%) of the masterbatch that ranges from 30 wt% to 70 wt% and a base polymer at a percent by weight (wt%) of the masterbatch that ranges from 30 wt% to 70 wt%.

In one or more embodiments, a hot melt adhesive composition may be combined with a tackifier masterbatch at a percent by weight (wt%) of the adhesive composition that ranges from 20 wt% to 70 wt%.

### Wax

Adhesive compositions in accordance with the present disclosure may optionally incorporate one or more waxes. Waxes suitable for use in the present invention include paraffin waxes, microcrystalline waxes, high density low molecular weight polyethylene waxes, by-product polyethylene waxes, Fischer-Tropsch waxes, oxidized Fischer-Tropsch waxes and functionalized waxes such as hydroxy stearamide waxes and fatty amide waxes. It is common in the art to use the terminology synthetic high melting point waxes to include high density low molecular weight polyethylene waxes, by-product polyethylene waxes and Fischer-Tropsch waxes. Modified waxes, such as vinyl acetate modified and maleic anhydride modified waxes may also be used. Examples of waxes useful in the practice of the invention will have a melting point of from about 600°C to about 64°C and will have an oil content of less that about 0.5.

Particular examples paraffin waxes having a ring and ball softening point of about 55°C. to about 85°C. Exemplary paraffin waxes are Okerin^{®} 236 TP available from Astor Wax Corporation, Doraville, Ga.; Penreco^{®} 4913 available from Pennzoil Products Co., Houston, Tex.; R-7152 Paraffin Wax available from Moore & Munger, Shelton, CN.; and Paraffin Wax 1297 available from International Waxes, Ltd in Ontario, Canada. Particularly preferred are paraffin waxes having melting points in the range of about 54.4 to 73.9°C (130 to 165°F), such as, for example, Pacemaker available from Citgo, and R-2540 available from Moore and Munger; and low melting point synthetic Fischer-Tropsch waxes having a melting point of less than about 82.2°C (180°F). The most preferred wax is paraffin wax with a melting point of 65.6°C (150°F). Other paraffinic waxes include waxes available from CP Hall under the product designations 1230, 1236, 1240, 1245, 1246, 1255, 1260, & 1262. CP Hall 1246 paraffinic wax is available from CP Hall (Stow, Ohio).

In one or more embodiments, adhesive compositions in accordance with the present disclosure may contain a percent by weight (wt%) of one or more waxes that range from a lower limit selected from one of 1wt%, 2 wt%, 3 wt%, or 5 wt% to an upper limit selected from one of 10 wt%, 15 wt%, 20 wt%, 25 wt%, or 30 wt%, where any lower limit can be used with any upper limit.

### Physical and Chemical Properties

Hot melt adhesive compositions exhibit a biobased carbon content, as determined by ASTM D6866-18 Method B of 5% to 95%. In some embodiments, hot melt adhesive compositions may exhibit a biobased carbon content as determined by ASTM D6866-18 Method B of at least 20%. Further, other embodiments may include at least 10%, 40%, 50%, 60%, 80%, or 90% biobased carbon, where the biobased carbon may be entirely contributed by the EVA copolymer or may also be contributed by other components as well.

Adhesive compositions in accordance with the present disclosure have a Brookfield viscosity, as determined by ASTM D3236 measured at 180 °C ranging from 30,000 to 90,000 mPa.s. Further one or more embodiments may have a Brookfield viscosity having a lower limit of any of 25,000 mPa.s, 30,000 mPa.s, 35,000 mPa.s, 40,000 mPa.s, and 45,000 mPa.s, to an upper limit of any of 65,000 mPa.s, 70,000 mPa.s, 75,000 mPa.s, 80,000 mPa.s, and 90,000 mPa.s, where any lower limit can be used in combination with any upper limit.

Adhesive compositions in accordance with the present disclosure may have a softening point as determined by ABNT NBR 9424/2008 that ranges from a lower limit selected from any one of 70 °C, 75 °C, 80 °C, 85 °C, or 89 °C to an upper limit selected from any one of 110 °C, 120 °C, 130 °C, 140 °C, or 150 °C where any lower limit can be used with any upper limit.

### Additives

Adhesive compositions in accordance with the present disclosure may include additives that modify various physical and chemical properties of an adhesive composition during blending that include one or more polymer additives such as processing aids, lubricants, antistatic agents, clarifying agents, nucleating agents, beta-nucleating agents, slipping agents, antioxidants, compatibilizers, antacids, light stabilizers such as HALS, IR absorbers, whitening agents, inorganic fillers, organic and/or inorganic dyes, anti-blocking agents, processing aids, flame-retardants, plasticizers, biocides, adhesion-promoting agents, metal oxides, mineral fillers, glidants, oils, anti-oxidants, antiozonants, accelerators, and vulcanizing agents.

### Preparation

Hot melt adhesive compositions in accordance with the present disclosure may be prepared in any conventional mixture device. In one or more embodiments, hot melt adhesive composition may be prepared by mixture in conventional Sigma mixers, horizontal mixers, kneaders, banbury mixers, mixing rollers, extruders, and the like.

In one or more embodiments, all the components may be mixed together in a single step. In other embodiments, when a secondary polymer is present in the composition, there can be a pre-mixture step of the biobased EVA and the secondary polymer in a conventional mixture device, such as in extruders, alternatively being pelletized, prior to a mixture with other components in a subsequent mixture step.

The hot melt compositions may be prepared in any known process for adhesive formulation such as compounding with Sigma mixers, horizontal mixers, kneaders, blenders, extruders, and any other available manufacturing processes.

### Applications

Hot melt adhesives may be used to generate multilayer structures by bonding similar or dissimilar substrates, which may include applying a hot melt adhesive composition to at least one substrate and bonding the layers together. For example, the adhesive composition may be melted and applied to the at least one substrate to which it is being bound. Application onto the substrate may be, for example, by use of a calender, a laminator (such as a flat bed laminator), by various welding techniques, or by various batch processes which may use a variety of heat sources. Substrates may take the form of films, blocks, sheets, fiber, thread, strip, ribbon, coating, foil, band, and the like. While there are no practical limits on the type of substrate that may be bonded using adhesive compositions in accordance with the present disclosure, exemplary substrates may include fabrics, non-woven materials, polymers and polymeric materials such as polyurethane, EVA, polypropylene, polyethylene, polyvinylchloride, polyester, polyamide, polyolefin, polyacrylic, polyester, polyvinyl chloride, polystyrene, cellulosics such as wood, metal, cardboard, paper, kraft and the like.

## Claims

1. A hot melt adhesive composition comprising:
a biobased ethylene vinyl acetate (EVA) copolymer comprising a biobased carbon content as determined by ASTM D6866-18 Method B of 5% to 95%; and
a tackifier;
wherein the composition has a Brookfield viscosity as determined by ASTM D3236 measured at 180 °C in the range of 30,000 to 90,000 mPa.s; and
wherein the biobased EVA copolymer has a melt index (I₂) as determined by ASTM D1238 in the range of 1.5 g/10min to 50 g/10min measured with a load of 2.16 kg at 190°C.

2. The hot melt adhesive composition of claim 1, wherein at least a portion of ethylene from the biobased EVA copolymer is obtained from a renewable carbon source and/or at least a portion of vinyl acetate from the biobased EVA copolymer is obtained from a renewable carbon source.

3. The hot melt adhesive composition of any of the above claims, wherein the biobased EVA copolymer comprises a vinyl acetate content as determined by ASTM D5594 of 8 wt% to 45 wt% and/or exhibits a density as determined by ASTM D792 within the range of 0.910 g/cm³ to 0.960 g/cm³.

4. The hot melt adhesive composition of any of the above claims, the tackifier is present at an amount ranging from 30 wt% to 80 wt% of the hot melt adhesive composition.

5. The hot melt adhesive composition of any one of the above claims, further comprising a secondary polymer at an amount that ranges from 8 to 50 wt% of the hot melt adhesive composition, wherein, optionally, the secondary polymer is selected from a group consisting of fossil EVA, ethylene-acrylic ester copolymers, polyethylene, polypropylene and combinations thereof, and, wherein, optionally, the fossil EVA exhibits a vinyl acetate content as determined by ASTM D5594 of 16 to 45 wt%, and a melt index (I₂) as determined by ASTM D1238 in the range of 2.5 to 900 g/10min measured with a load of 2.16 kg at 190°C.

6. The hot melt adhesive composition of any of the above claims, further comprising a wax at an amount that ranges from 1 to 30 wt%.

7. The hot melt adhesive composition of any of the above claims, wherein:
the biobased EVA copolymer is present at an amount ranging from 20 to 70 wt% of the hot melt adhesive composition; and
the tackifier is present at an amount ranging from 30 to 80 wt% of the hot melt adhesive composition.

8. The hot melt adhesive composition of claim 7, wherein the biobased EVA copolymer has a vinyl acetate content as determined by ASTM D5594 of 16 to 21 wt%; and a melt index (I₂) as determined by ASTM D1238 in the range of 1.5 g/10min to 5 g/10min measured with a load of 2.16 kg at 190°C.

9. The hot melt adhesive composition of any one of the above claims, wherein the composition exhibits a softening point as determined by ABNT NBR 9424/2008 in the range of 75°C to 150°C.

10. The hot melt adhesive composition of any one of the above claims, wherein the hot melt adhesive composition exhibits a biobased carbon content as determined by ASTM D6866-18 Method B of at least 20%.

11. Use of the hotmelt adhesive composition of any of the above claims for bonding a substrate to a similar or dissimilar substrate, wherein the substrate is selected from a group consisting of fabric, non-woven materials, polyurethane, ethylene vinyl acetate copolymer, polypropylene, polyethylene, polyvinylchloride, polyester, polyamide, wood, metal, paper and kraft.

12. A process for bonding a substrate to a similar or dissimilar substrate comprising applying to at least one substrate a hot melt adhesive composition and bonding said substrate together, wherein the hot melt adhesive composition comprises the hot melt adhesive composition of any of claims 1 to 10.

13. A multi-layer article, comprising:
at least one layer of the hot melt adhesive composition of any of claims 1 to 10; and
one or more substrate layers.

14. The article of claim 13, wherein the substrate layers are made from one or more materials chosen from a group consisting of fabric, non-woven materials, polyurethane, ethylene vinyl acetate copolymer, polypropylene, polyethylene, polyvinylchloride, polyester, polyamide, wood, metal, paper and kraft.

## Patentansprüche

1. Schmelzklebstoffzusammensetzung umfassend:
Ethylenvinylacetat(EVA)-Copolymer auf Biobasis umfassend einen Kohlenstoffgehalt auf Biobasis, wie bestimmt nach ASTM D6866-18 Verfahren B, von 5 % bis 95 %; und
einen Klebrigmacher;
wobei die Zusammensetzung eine Brookfield-Viskosität, wie bestimmt nach ASTM D3236, gemessen bei 180 °C, in dem Bereich von 30.000 bis 90.000 mPa·s aufweist; und
wobei das EVA-Copolymer auf Biobasis einen Schmelzindex (I₂), wie bestimmt nach ASTM D1238, in dem Bereich von 1,5 g/10 min bis 50 g/10 min, gemessen mit einer Last von 2,16 kg bei 190 °C, aufweist.

2. Schmelzklebstoffzusammensetzung nach Anspruch 1, wobei wenigstens ein Teil von Ethylen aus dem EVA-Copolymer auf Biobasis aus einer erneuerbaren Kohlenstoffquelle erhalten ist und/oder wenigstens ein Teil von Vinylacetat aus dem EVA-Copolymer auf Biobasis aus einer erneuerbaren Kohlenstoffquelle erhalten ist.

3. Schmelzklebstoffzusammensetzung nach einem der vorstehenden Ansprüche, wobei das EVA-Copolymer auf Biobasis einen Vinylacetatgehalt, wie bestimmt nach ASTM D5594, von 8 Gew .-% bis 45 Gew.-% umfasst und/oder eine Dichte, wie bestimmt nach ASTM D792, in dem Bereich von 0,910 g/cm³ bis 0,960 g/cm³ aufweist.

4. Schmelzklebstoffzusammensetzung nach einem der vorstehenden Ansprüche, wobei der Klebrigmacher in einer Menge in dem Bereich von 30 Gew.-% bis 80 Gew.-% der Schmelzklebstoffzusammensetzung vorhanden ist.

5. Schmelzklebstoffzusammensetzung nach einem der vorstehenden Ansprüche, ferner umfassend ein sekundäres Polymer in einer Menge, die in dem Bereich von 8 bis 50 Gew.-% der Schmelzklebstoffzusammensetzung liegt, wobei gegebenenfalls das sekundäre Polymer ausgewählt ist aus einer Gruppe bestehend aus fossilem EVA, Ethylen-Acrylester-Copolymeren, Polyethylen, Polypropylen und Kombinationen davon, und wobei gegebenenfalls das fossile EVA einen Vinylacetatgehalt nach ASTM D5594 von 16 bis 45 Gew.-% und einen Schmelzindex (I₂) nach ASTM D1238 in dem Bereich von 2,5 bis 900 g/10 min, gemessen mit einer Last von 2,16 kg bei 190 °C, aufweist.

6. Schmelzklebstoffzusammensetzung nach einem der vorstehenden Ansprüche, ferner umfassend ein Wachs in einer Menge in dem Bereich von 1 bis 30 Gew.-%.

7. Schmelzklebstoffzusammensetzung nach einem der vorstehenden Ansprüche, wobei:
das EVA-Copolymer auf Biobasis in einer Menge in dem Bereich von 20 bis 70 Gew.-% der Schmelzklebstoffzusammensetzung vorhanden ist; und
der Klebrigmacher in einer Menge in dem Bereich von 30 bis 80 Gew.-% der Schmelzklebstoffzusammensetzung vorhanden ist.

8. Schmelzklebstoffzusammensetzung nach Anspruch 7, wobei das EVA-Copolymer auf Biobasis einen Vinylacetatgehalt, wie bestimmt nach ASTM D5594, von 16 bis 21 Gew.-% und einen Schmelzindex (I₂), wie bestimmt nach ASTM D1238, in dem Bereich von 1,5 g/10 min bis 5 g/10 min, gemessen mit einer Last von 2,16 kg bei 190 °C, aufweist.

9. Schmelzklebstoffzusammensetzung nach einem der vorstehenden Ansprüche, wobei die Zusammensetzung einen Erweichungspunkt, wie bestimmt nach ABNT NBR 9424/2008, in dem Bereich von 75 °C bis 150 °C aufweist.

10. Schmelzklebstoffzusammensetzung nach einem der vorstehenden Ansprüche, wobei die Schmelzklebstoffzusammensetzung einen Kohlenstoffgehalt auf Biobasis nach ASTM D6866-18 Verfahren B von wenigstens 20 % aufweist.

11. Verwendung der Schmelzklebstoffzusammensetzung nach einem der vorstehenden Ansprüche zum Binden eines Substrats an ein ähnliches oder nicht ähnliches Substrat, wobei das Substrat ausgewählt ist aus einer Gruppe bestehend aus Gewebe, Vliesmaterialien, Polyurethan, Ethylenvinylacetat-Copolymer, Polypropylen, Polyethylen, Polyvinylchlorid, Polyester, Polyamid, Holz, Metall, Papier und Kraft.

12. Verfahren zum Binden eines Substrats an ein ähnliches oder nicht ähnliches Substrat, umfassend Aufbringen einer Schmelzklebstoffzusammensetzung auf wenigstens ein Substrat und Verbinden der Substrate miteinander, wobei die Schmelzklebstoffzusammensetzung die Schmelzklebstoffzusammensetzung nach einem der Ansprüche 1 bis 10 umfasst.

13. Mehrschichtiger Gegenstand umfassend:
wenigstens eine Schicht der Schmelzklebstoffzusammensetzung nach einem der Ansprüche 1 bis 10; und
eine oder mehrere Substratschichten.

14. Gegenstand nach Anspruch 13, wobei die Substratschichten aus einem oder mehreren Materialien ausgewählt aus einer Gruppe bestehend aus Gewebe, Vliesmaterialien, Polyurethan, Ethylenvinylacetat-Copolymer, Polypropylen, Polyethylen, Polyvinylchlorid, Polyester, Polyamid, Holz, Metall, Papier und Kraft bestehen.

## Revendications

1. Une composition adhésive thermofusible comprenant :
un copolymère éthylène-acétate de vinyle (EVA) biosourcé comprenant une teneur en carbone biosourcé, déterminée selon ASTM D6866-18 méthode B, de 5 % à 95 % ; et
un tackifiant ;
dans laquelle la composition présente une viscosité Brookfield, déterminée selon ASTM D3236 et mesurée à 180 °C, dans la plage de 30 000 à 90 000 mPa·s ; et
dans laquelle le copolymère EVA biosourcé a un indice de fluidité (h), déterminé selon ASTM D1238, compris entre 1,5 g/10min et 50 g/10min, mesuré avec une charge de 2,16 kg à 190 °C.

2. La composition adhésive thermofusible selon la revendication 1, dans laquelle au moins une partie de l'éthylène du copolymère EVA biosourcé est obtenue à partir d'une source de carbone renouvelable et/ou au moins une partie de l'acétate de vinyle du copolymère EVA biosourcé est obtenue à partir d'une source de carbone renouvelable.

3. La composition adhésive thermofusible selon l'une quelconque des revendications ci-dessus, dans laquelle le copolymère EVA biosourcé présente une teneur en acétate de vinyle, déterminée selon ASTM D5594, de 8 % à 45 % en poids et/ou présente une densité, déterminée selon ASTM D792, dans la plage de 0,910 g/cm³ à 0,960 g/cm³.

4. La composition adhésive thermofusible selon l'une quelconque des revendications ci-dessus, le tackifiant étant présent en quantité comprise entre 30 % en poids et 80 % en poids de la composition adhésive thermofusible.

5. La composition adhésive thermofusible selon l'une quelconque des revendications ci-dessus, la composition comprenant en outre un polymère secondaire en quantité comprise entre 8 et 50 % en poids de la composition adhésive thermofusible, dans laquelle, optionnellement, le polymère secondaire est choisi parmi un groupe constitué de EVA d'origine fossile, copolymère éthylène-ester acrylique, polyéthylène, polypropylène et leurs combinaisons, et dans laquelle, optionnellement, l'EVA d'origine fossile présente une teneur en acétate de vinyle, déterminée selon ASTM D5594, de 16 à 45 % en poids, et un indice de fluidité (h), déterminé selon ASTM D1238, dans la plage de 2,5 à 900 g/10min mesuré avec une charge de 2,16 kg à 190 °C.

6. La composition adhésive thermofusible de l'une quelconque des revendications ci-dessus, comprenant en outre une cire en quantité comprise entre 1 et 30 % en poids.

7. La composition adhésive thermofusible selon l'une quelconque des revendications ci-dessus, dans laquelle :
le copolymère EVA biosourcé est présent en quantité comprise entre 20 et 70 % en poids de la composition adhésive thermofusible ; et
le tackifiant est présent en quantité comprise entre 30 et 80 % en poids de la composition adhésive thermofusible.

8. La composition adhésive thermofusible selon la revendication 7, dans laquelle le copolymère EVA biosourcé a une teneur en acétate de vinyle telle que déterminée par ASTM D5594 de 16 à 21 % en poids ; et un indice de fluidité (h) tel que déterminé par ASTM D1238 dans la plage de 1,5 g/10min à 5 g/10min mesuré avec une charge de 2,16 kg à 190 °C.

9. La composition adhésive thermofusible selon l'une quelconque des revendications ci-dessus, dans laquelle la composition présente un point de ramollissement, tel que déterminé par ABNT NBR 9424/2008, compris entre 75°C et 150°C.

10. La composition adhésive thermofusible selon l'une quelconque des revendications ci-dessus, dans laquelle la composition adhésive thermofusible présente une teneur en carbone biosourcé, telle que déterminée par ASTM D6866-18 méthode B, d'au moins 20 %.

11. Utilisation de la composition adhésive thermofusible selon l'une quelconque des revendications ci-dessus pour coller un substrat à un substrat similaire ou dissemblable, le substrat étant choisi parmi un groupe constitué de tissu, matériaux non tissés, polyuréthane, copolymère éthylène-acétate de vinyle, polypropylène, polyéthylène, polychlorure de vinyle, polyester, polyamide, bois, métal, papier et kraft.

12. Un procédé pour coller un substrat à un substrat similaire ou dissemblable comprenant l'application, sur au moins un substrat, d'une composition adhésive thermofusible et le collage dudit substrat ensemble, dans lequel la composition adhésive thermofusible comprend la composition adhésive thermofusible de l'une quelconque des revendications 1 à 10.

13. Article multicouche comprenant :
au moins une couche de la composition adhésive thermofusible de l'une quelconque des revendications 1 à 10 ; et
une ou plusieurs couches de substrat.

14. L'article selon la revendication 13, dans lequel les couches de substrat sont fabriquées à partir d'un ou plusieurs matériaux choisis parmi un groupe constitué de tissu, matériaux non tissés, polyuréthane, copolymère éthylène-acétate de vinyle, polypropylène, polyéthylène, polychlorure de vinyle, polyester, polyamide, bois, métal, papier et kraft.
